# EUROPÄISCHE PATENTSCHRIFT

(11) **EP 0 617 072 B1**
(45) Veröffentlichungstag und Bekanntmachung des Hinweises auf die Patenterteilung: **03.09.1997**
(21) Anmeldenummer: 94104401.8
(22) Anmeldetag: 21.03.1994
(51) Int. Cl.: C08G 69/26, B32B 27/08

(54) **Barriereschichten aus transparentem Copolyamid**
Barrier layers made of transparent copolyamide
Couches barrières à base de copolyamide transparent

(30) Priorität: 24.03.1993 DE 4309534
(43) Veröffentlichungstag der Anmeldung: 28.09.1994
(73) Patentinhaber: EMS-INVENTA AG, 8001 Zürich (CH)
(72) Erfinder: Presenz, Ulrich, Dr. rer. nat., CH-7014 Trin (CH); Hewel, Manfred, Dr. rer. nat., CH-7415 Rodels (CH)
(74) Vertreter: Müller-Boré & Partner Patentanwälte

(56) Entgegenhaltungen:
- EP-A- 0 288 972
- EP-A- 0 318 964
- EP-A- 0 408 925
- EP-A- 0 409 666
- EP-A- 0 411 791

## Beschreibung

Gegenstand der vorliegenden Erfindung ist ein transparentes Copolyamid sowie dessen Verwendung als Barriereschicht, welche in Mehrschichtverbunden, insbesondere für Käseverpackungen, Verwendung findet.

Derzeit sind Mehrschichtverbunde, die Polyvinylidenchlorid als Barrierematerial enthalten, in der Verpackungsindustrie weit verbreitet. Beispielhaft seien genannt: EP-PS 369 808, US-PS 4 424 243 und 4 801 486. Der Hauptnachteil von Polyvinylidenchlorid ist neben seiner schwierigen Verarbeitbarkeit und der starken Korrosionswirkung auf die Verarbeitungsmaschinen, die Umweltbelastung bei der Entsorgung aufgrund des freiwerdenden Chlors und der möglichen Bildung von Dioxinen.

Aus der EP-A-O 409 666 sind Polyamidzusammensetzungen bekannt, die hervorragende Gasbarriere-Eigenschaften haben. Diese Polyamide weisen wiederkehrende Einheiten 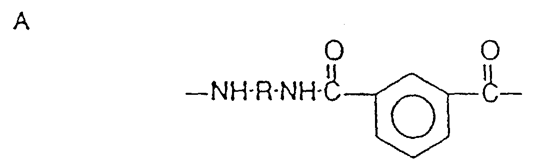 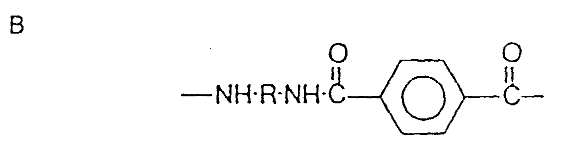 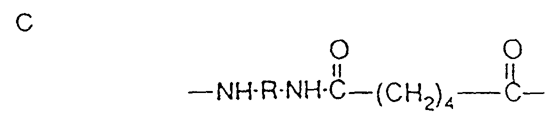 in solchen Verhältnissen auf, dass die Molverhältnisse der Dicarbonsäure-Einheiten in A, B und C 49,5-0,5/0-20/0,5-49,5 betragen und in denen R ein Rest 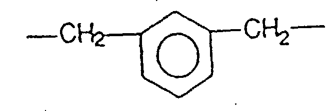 und

-(CH₂)₆-

ist, und zwar mit der Massgabe, dass diese beiden Reste in den Einheiten A, B und C im Molverhältnis von 0,5-50/49,5-0 vorhanden sind.

In neuerer Zeit ist gemäss EP-PS 457 598 auch der Einsatz eines Copolyamids 6/12 als Barrierematerial bekannt geworden. Ein grosser Nachteil dieses Materials ist seine von der Umgebungsfeuchte abhängige Sauerstoffbarriere, welche mit zunehmender Feuchtigkeit geringer wird.

Es besteht im Verpackungsbereich jedoch Bedarf an einem Barrierematerial, welches eine gute Verarbeitbarkeit zeigt, keine korrosiven Eigenschaften besitzt, halogenfrei ist und dessen Barrierewirkung sich bei Feuchtigkeitsaufnahme nicht verschlechtert.

Mit Blends aus 3 und mehr, bevorzugt teilaromatischen, Polyamiden lassen sich teilweise gute Barrierewirkungen erzielen. Die Nachteile der Blends gegenüber Copolyamiden sind die schwierige Granulierung, der grosse Prüfaufwand für jede einzelne Komponente und der zusätzliche Extrusionsschritt, die neben deutlich höheren Rohstoffkosten die Produktionskosten erhöhen.

Die dieser Erfindung zugrundeliegende Aufgabe liegt in der Ueberwindung der Nachteile des Standes der Technik. Zusätzlich ist für Barrierematerial für den Anwendungsbereich der Käseverpackung ein besonderes Barriereverhalten notwendig. Das Verhältnis Kohlendioxidbarriere zu Sauerstoffbarriere muss im Bereich von 3:1 bis 5:1 oder darüber liegen.

Diese Aufgaben werden durch die transparenten Copolyamide mit den kennzeichnenden Merkmalen des Anspruchs 1 und ihre Verwendung als Barriereschicht gemäss Anspruch 5 sowie deren Verwendung zur Herstellung von Mehrschichtverbunden gemäss Anspruch 6 gelöst.

Sie wird insbesondere gelöst durch Verwendung der erfindungsgemässen Copolyamide als Barriereschicht, deren Verhältnis der Kohlendioxid- zur Sauerstoffbarrierewerte mindestens 3:1 ist und welche vorteilhaft im Lebensmittelbereich in Mehrschichtverbunden zur Verpackung von Käse und käsehaltigen Produkten eingesetzt werden kann.

Die Barriereschichten sind Folien aus Copolyamid, die sich in vorteilhafter Weise durch gute biaxiale Reckbarkeit, hohen Schrumpf des gereckten Materials, hohe Transparenz, ausreichende Flexibilität und Kompatibilität auszeichnen. Sie können problemlos zusammen mit anderen Schichten aus thermoplastisch verarbeitbarem Polymer, z.B. Stützschichten, Siegelschichten oder Schutzschichten, durch Koextrusion hergestellt und als Mehrschichtverbund verwendet werden.

Das die Barriereschicht bildende Copolyamid ist polykondensiert aus den Komponenten
- I: Hexamethylendiamin/Adipinsäure mit 15 bis 75 Mol-%
- IIa: Hexamethylendiamin/Azelainsäure mit 15 bis 65 Mol-%, welche ganz oder teilweise ersetzt sein kann durch
- IIb: Hexamethylendiamin/Sebazinsäure und
- IIIa: Hexamethylendiamin/Isophthalsäure mit 10 bis 70 Mol-%-Anteil, welche ganz oder teilweise ersetzt sein kann durch
- IIIb: Hexamethylendiamin/Terephthalsäure, wobei die Gesamtmenge der Komponenten 100 Mol-% beträgt.

Eine bevorzugte Zusammensetzung besteht aus

| | |
|---|---|
| 15 bis 60 Mol-% | I |
| 15 bis 55 Mol-% | IIa und/oder IIb |
| 10 bis 45 Mol-% | IIIa und/oder IIIb |

Dabei sind

| | |
|---|---|
| 35 bis 55 Mol-% | I |
| 15 bis 55 Mol-% | IIa oder IIb |
| 10 bis 30 Mol-% | IIIa oder IIIb |

besonders bevorzugt.

Die Komponenten ergänzen sich auf jeweils 100 Mol-%. Wie der Fachmann weiss, müssen Säure und Diamin in nahezu äquimolarem Verhältnis vorliegen.

Die erfindungsgemässen Copolyamide können übliche Additive nach dem Stand der Technik, wie Kettenregler, Stabilisatoren, Antischaummittel und Kristallisationsbeschleuniger enthalten.

Die Herstellung der erfindungsgemässen Copolyamide erfolgt in an sich bekannter Weise nach dem Schmelzkondensationsverfahren.

Je nach Verwendung liegt der bevorzugte Bereich der relativen Viskosität der erfindungsgemässen Copolyamids, gemessen als 0,5%ige Lösung in m-Kresol bei 23°C, zwischen 1,75 und 2,5. Es sind jedoch sowohl höhere als auch tiefere Viskositäten problemlos verwendbar.

Die Herstellung der Barriereschichten, z.B. zu Test und Prüfungszwecken, erfolgt in bekannter Weise durch Folienblasen.

Für den Mehrschichtverbund können mehrere, gegebenenfalls unterschiedliche bekannte Barriereschichten und mehrere weitere bekannte Polymer-Schichten verwendet werden.

Bevorzugte weitere Polymerschichten sind bekannte Schutz- und Stützschichten, die dem Mehrschichtverbund definierte Gebrauchseigenschaften geben. Bekannte Siegelschichten werden notwendigerweise eingesetzt, um den Mehrschichtverbund durch Heiss-Siegeln verschliessbar zu machen. Auch bekannte Haftvermittlerschichten können mit Vorteil verwendet werden.

Bevorzugte Polymere für Schutz- und Stützschichten sind solche aus Polyamiden, Polyolefinen oder Polyestern.

Bevorzugte Haftvermittlerschichten sind funktionalisierte, das heisst mit funktionellen Gruppen versehene Polyolefine. Siegelschichten bestehen vorteilhafterweise aus tiefschmelzenden Polymeren. Bevorzugt sind sogenannte Ionomere. Die Herstellung der Mehrschichtverbunde erfolgt vorteilhaft auf Coextrusionsanlagen.

Die Beispiele erläutern die Erfindung ohne sie zu begrenzen.

**Tabelle 1:**

| Zusammensetzung der Barriereschichten von Beispiel 1-3 | | | | |
|---|---|---|---|---|
| Zusammensetzung der Copolyamide in Barriereschichten | | | | |
| Beispiel Nr. | I Mol-% | IIa Mol-% | IIIa Mol-% | IIIb Mol-% |
| 1 | 38 | 52 | 10 | -- |
| 2 | 55 | 15 | 30 | -- |
| 3 | 38 | 52 | -- | 10 |
| IIIa Hexamethylendiamin/Isophthalsäure IIIb Hexamethylendiamin/Terephthalsäure | | | | |

**Tabelle 2:**

| Barriereverhalten bei 0 bzw. 85% relativer Feuchtigkeit (rF) | | | | |
|---|---|---|---|---|
| Beispiel Nr. | Umgebungsfeuchte | Barriereverhalten* | | Verhältnis *** |
| | | Sauerstoff ** | Kohlendioxid ** | |
| 1 | 0 % rF | 65 | 204 | 3,1 |
| | 85 % rF | 40 | 469 | 11,7 |
| 2 | 0 % rF | 48 | 144 | 3,0 |
| | 85 % rF | 24 | 209 | 8,7 |
| 3 | 0 % rF | 75 | 228 | 3,0 |
| | 85 % rF | 45 | 363 | 8,1 |
| Vergl.- Versuch | 0 % rF | 120 | 400 | 3,3 |
| | 82 % rF | 200 | 800 | 4,0 |

| | | | | |
|---|---|---|---|---|
| * Blasfoliendicke 50 µm | | | | |
| ** cm³/m³ Tag bar Messgeräte: 85 % rF Mocon Oxtran Twin 0 % rF Lissy L 100 | | | | |
| *** Verhältnis Kohlendioxid- zu Sauerstoffbarriere (rF: relative Feuchtigkeit) | | | | |

### Vergleichsversuch:

Das Copolyamid ist ein solches auf Basis Caprolactam und Laurinlactam.

Die Barriereschichten der Beispiele 1-3 mit den erfindungsgemässen Copolyamiden zeigen gegenüber dem Vergleichsversuch die deutlich bessere Sauerstoffbarriere und das im feuchten Zustand wesentlich günstigere Verhältnis Kohlendioxid- zu Sauerstoffbarriere.

Auch im Praxistest, d.h. bei der Lagerung von verpacktem Käse im Kühlraum, bewährt sich das Folienmaterial mit dem Copolyamid aus Beispiel Nr. 1 als Barrierematerial. Es gibt nach 6 Monaten Lagerungsdauer keine Schimmelbildung und keine Bombage durch das bei der Käsereifung entstehende Kohlendioxid.

Tabelle 3 enthält den Vergleich einer kommerziell verwendeten Käseverpackung mit Polyvinylidenchlorid als Barriereschicht und einen erfindungsgemässen Mehrschichtverbund mit dem Copolyamid aus Beispiel Nr. 1 als Barriereschicht in Kombination mit einer inneren Ionomer-Siegelschicht, einer äusseren Schutzschicht aus Polyolefin und zwei die Barriereschicht umgebenden Haftschichten.

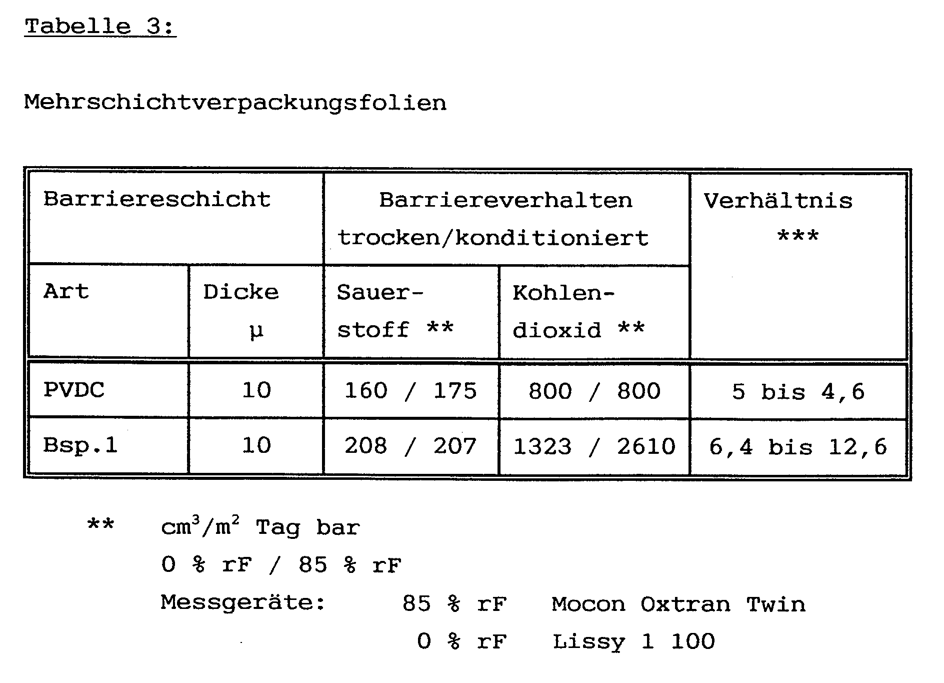

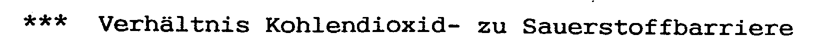

Der Mehrschichtverbund mit der Barriereschicht aus erfindungsgemässem Copolyamid ermöglicht sowohl eine ausreichende Sauerstoffbarriere als auch ein ausgezeichnetes Barriereverhältnis Kohlendioxid zu Sauerstoff.

Ein besonderer Vorteil der Copolyamide als Barrierematerial gegenüber den Verbunden mit Polyvinylidenchlorid ist die Unabhängigkeit der Sauerstoffbarriere von der Umgebungsfeuchte. Weitere Vorteile sind die gute Flexibilität, das Fehlen korrosiver Eigenschaften und vor allem die Halogenfreiheit.

Die Sauerstoffbarriere der Barriereschichten aus erfindungsgemässen Copolyamiden kann im trockenen Zustand durch Zusatz von an sich bekannten Nukleierungsmitteln, z.B. Polyamid 22, oder mineralischen Nukleierungsmitteln wie Talkum noch verbessert werden. Zur Anwendung gelangen diese Nukleierungsmittel in den jeweils üblichen bekannten Konzentrationen. Ausserdem wird durch diese Massnahme nach der Folienextrusion schneller ein stabiles Barriereniveau erreicht.

## Patentansprüche

1. Transparentes Copolyamid, bestehend aus den Komponenten
I Hexamethylendiamin/Adipinsäure mit 15 bis 75 Mol-%
IIa Hexamethylendiamin/Azelainsäure mit 15 bis 65 Mol-%,
welche ganz oder teilweise ersetzt sein kann durch
IIb Hexamethylendiamin/Sebazinsäure und
IIIa Hexamethylendiamin/Isophthalsäure mit 10 bis 70 Mol-%-Anteil,
welche ganz oder teilweise durch
IIIb Hexamethylendiamin/Terephthalsäure ersetzt sein kann, wobei die Gesamtmenge der Komponenten 100 Mol-% beträgt.

2. Copolyamid gemäss Anspruch 1, bestehend aus den Komponenten
| | |
|---|---|
| I | mit 15 bis 60 Mol-% |
| IIa und/oder IIb | mit 15 bis 55 Mol-% und |
| IIIa und/oder IIIb | mit 10 bis 45 Mol-%. |

3. Copolyamid gemäss Anspruch 2, bestehend aus den Komponenten
| | |
|---|---|
| I | mit 35 bis 55 Mol-% |
| IIa oder b | mit 15 bis 55 Mol-% |
| IIIa oder b | mit 10 bis 30 Mol-%. |

4. Copolyamid gemäss einem der Ansprüche 1 bis 3, mit einer relativen Viskosität zwischen 1,75 und 2,50, gemessen als 0,5%ige Lösung in m-Kresol bei 23°C.

5. Verwendung der Copolyamide gemäss den Ansprüchen 1 bis 4 als Barriereschicht für Mehrschicht-Verbunde.

6. Verwendung mindestens einer Barriereschicht gemäss Anspruch 5 zur Herstellung von Mehrschichtverbunden durch Coextrusion.

7. Verwendung gemäss Anspruch 6, wobei die mindestens eine Barriereschicht mit mindestens einer weiteren Polymer-Schicht aus der Gruppe der bekannten Haftschichten, Stützschichten, Schutzschichten und Siegelschichten kombiniert wird.

8. Verwendung gemäss Anspruch 7, wobei die mindestens eine weitere Stützschicht ausgewählt ist aus der Gruppe Polyamide, Polyolefine, ionomere Polyolefine und Polyester.

## Claims

1. Transparent copolyamide comprising the components
I hexamethylene diamine/adipic acid with 15 to 75 mole %
IIa hexamethylene diamine/azelaic acid with 15 to 65 mole %, which can be wholly or partly replaced by
IIb hexamethylene diamine/sebacic acid and
IIIa hexamethylene diamine/isophthalic acid with 10 to 70 mole %, which can be wholly or partly replaced by
IIIb hexamethylene diamine/terephthalic acid, the total quantity of the components being 100 mole %.

2. Copolyamide according to claim 1, comprising the components
I with 15 to 60 mole %
IIa and/or IIb with 15 to 55 mole % and
IIIa and/or IIIb with 10 to 45 mole %.

3. Copolyamide according to claim 2, comprising the components
I with 35 to 55 mole %
IIa or b with 15 to 55 mole %
IIIa or b with 10 to 30 mole %.

4. Copolyamide according to one of the claims 1 to 3, with a relative viscosity between 1.75 and 2.50, measured as a 0.5% solution in m-cresol at 23°C.

5. Use of the copolyamides according to claims 1 to 4 as a barrier layer for multilayered structures.

6. Use of at least one barrier layer according to claim 5 for producing multilayered structures by coextrusion.

7. Use according to claim 6, the at least one barrier layer being combined with at least one further polymer layer from the group of known adhesive layers, support layers, protective layers and sealing layers.

8. Use according to claim 7, the at least one further support layer being chosen from the group polyamides, polyolefins, ionomeric polyolefins and polyesters.

## Revendications

1. Copolyamide transparent formé des composants :
I hexaméthylènediamine/acide adipique à raison de 15 à 75 % en moles,
IIa hexaméthylènediamine/acide azélaïque à raison de 15 à 65 % en moles, qui peut être partiellement ou totalement remplacé par
IIb hexaméthylènediamine/acide sébacique et
IIIa hexaméthylènediamine/acide isophtalique dans une proportion de 10 à 70 % en moles, qui peut être partiellement ou totalement remplacé par
IIIb hexaméthylènediamine/acide téréphtalique,
la quantité totale de ces composants étant de 100 % en moles.

2. Copolyamide selon la revendication 1, formé des composants :
| | |
|---|---|
| I | à raison de 15 à 60 % en moles |
| IIa et/ou IIb | à raison de 15 à 55 % en moles et |
| IIIa et/ou IIIb | à raison de 10 à 45 % en moles. |

3. Copolyamide selon la revendication 2, formé des composants :
| | |
|---|---|
| I | à raison de 35 à 55 % en moles |
| IIa ou b | à raison de 15 à 55 % en moles |
| IIIa ou b | à raison de 10 à 30 % en moles. |

4. Copolyamide selon l'une des revendications 1 à 3, ayant une viscosité relative comprise entre 1,75 et 2,50, mesurée sous forme de solution à 0,5 % dans du m-crésol, à 23°C.

5. Utilisation des copolyamides selon les revendications 1 à 4 comme couche formant barrière pour composites multicouches.

6. Utilisation d'au moins une couche formant barrière selon la revendication 5 pour la fabrication de composites multicouches par coextrusion.

7. Utilisation selon la revendication 6, ladite au moins une couche formant barrière étant combinée avec au moins une couche polymère supplémentaire choisie dans l'ensemble des couches adhésives, des couches de support, des couches de protection et des couches de scellement connues.

8. Utilisation selon la revendication 7, ladite au moins une couche de support supplémentaire étant choisie dans l'ensem-ble constitué par les polyamides, les polyoléfines, les polyoléfines ionomères et les polyesters.
